# EUROPEAN PATENT APPLICATION

(11) **EP 2 415 619 A1**
(43) Date of publication of application: **08.02.2012**
(21) Application number: 11175448.7
(22) Date of filing: 26.07.2011
(51) Int. Cl.: B60C 23/04, H01L 41/04, H01L 41/113

(54) **Self-powered sensing module and system for monitoring the conditions of the tyres of a vehicle provided with at least one self-powered sensing module**

(30) Priority: 05.08.2010 IT MI20101508
(71) Applicant: Bridgeport S.R.L., 24060 Bolgare (BG) (IT)
(72) Inventor: Leo, Leonardo, 25065 Lumezzane (Brescia) (IT); Bandera, Giorgio, 25030 Rudiano (Brescia) (IT)
(74) Representative: Petruzziello, Aldo

(57) **Abstract**

A description is given of a self-powered sensing module (10) comprising at least one sensor (Sp, St, Sa) suitable for detecting an operating parameter of a vehicle tyre, transmission means (Tx) of the at least one signal detected by the at least one sensor (Sp, St, Sa) and supply means (30, 40, 50) for the at least one sensor (Sp, St, Sa) and the transmission means (Tx), the supply means (30, 40, 50) comprising a piezoelectric generator (40) electrically connected to a harvesting device (50) of the piezoelectric energy, which are mounted at the tyre inflation valve (15), thereby being easily replaceable and making optimum use of the mechanical vibrations of the vehicle. A description is also given of a system for monitoring the conditions of the tyres of a motor vehicle including at least one self-powered sensing module made in this way.

## Description

The present invention relates, in general, to the field of systems for monitoring the conditions of the tyres of a vehicle. In particular the invention relates to a self-powered sensing module, i.e. able to function without batteries, and a system for monitoring the conditions of the tyres of a vehicle provided with at least one self-powered sensing module.

Systems for the monitoring of the pressure of the tyres of a vehicle, commonly known by the acronym TPMS (tyre pressure monitoring system), are known commercially.

The TPMS are created to respond to the need of keeping under control the internal pressure of the tyres of vehicles, which, if not monitored correctly, leads to serious consequences for road safety and to very many accidents, often fatal.

The US NHTSA (National Highway Traffic Safety Administration) estimates that 23,000 accidents per year, of which 535 with victims, are due to incorrect inflation or to the bursting of tyres; France's Securité Routière has found that 9% of fatal accidents are due to a low tyre pressure; Germany's DEKRA has reported that the problem of low pressure in tyres is correlated to 41% of accidents with injuries. Moreover, from a recent study, again performed in Germany, it emerged that 75% of vehicles travelling on roads have at least one tyre deflated by at least 3 psi.

In addition to the problems stated above and linked to road safety, failure to control the correct pressure of the tyres leads to extra consumption of fuel, due to a greater resistance to rolling by the tyre, in other words to a greater friction between tyre and road surface.

Furthermore, deflated tyres wear more rapidly, so that they are less durable and have to be changed with greater frequency.

The TPMS are divided, generally, into two categories: indirect TPMS and direct TPMS.

Indirect TPMS use sensors already installed in the vehicle, such as for example speed sensors and sensors of the anti-blocking system (ABS), to compare the speed of rotation of the wheel and determine the conditions of possible deflation or low pressure of the tyre. A deflated tyre has, in fact, a slightly reduced external rolling diameter, so that it rolls at a different speed from the speed of rolling of a correctly inflated tyre.

These indirect systems have the disadvantage that the driver is alerted to the fact of having one or more tyres deflated when the latter reach approximately 25% of underpressure.

Direct TPMS provide a plurality of pressure sensing modules, typically one for each tyre, each of which includes a pressure sensor, a radio transmitter and a radio reception aerial placed in the chassis of the vehicle, close to the respective tyre, for example under the mudguard, and connected, by cable or wireless, to a central processing unit of the vehicle.

During use each pressure sensor detects the pressure value in the respective tyre and sends it to the radio transmitter. The radio transmitter processes the signal received from the pressure sensor and transmits it to the radio reception aerial, which sends it to the central processing unit. The central processing unit decodes the signals indicating the pressure of the tyres coming from the radio reception aerials and displays on a display, positioned preferably on the dashboard of the vehicle, the pressure values of each tyre. In this way the driver has an immediate indication of the tyre or of the tyres which do not respect the correct operating values and can promptly intervene on them. In the sensing modules for known direct TPMS the pressure sensors, and the devices for radio reception and transmission, are powered by batteries, rechargeable or otherwise, included in the same sensing module.

Batteries are sources of finite energy and therefore need periodical operations of replacement and disposal or restoring by means of recharging. This limits the working life and duration of the sensing modules.

Moreover the batteries, typically lithium batteries, are costly and this therefore increases the costs of the sensing module and of the TPMS.

To avoid the disadvantages mentioned above, TPMS equipped with sensing modules without batteries have been introduced, so-called self-powered, in which traditional batteries have been replaced by piezoelectric generators which, as is known, exploit the properties of the piezoelectric materials to generate electrical energy when bent or subjected to stresses.

The patent documents WO 03/095245 and EP 1 547 827 describe devices for the monitoring of the pressure of the tyres of a vehicle comprising pressure sensors powered by a piezoelectric generator.

In WO 03/095245 the piezoelectric generator is made up of a structure comprising a plurality of piezoelectric fibres embedded in an epoxy matrix, attached to the rim of the tyre.

In EP 1 547 827 the piezoelectric generator is made up of a thin layer of piezoelectric material with an H configuration applied on the internal base of the tyre via elastic fixing means so as to deform, producing electrical energy, when the tyre rotates. Both the solutions listed above have disadvantages.

In the first place the piezoelectric generator, being attached, respectively, on the rim and on the internal base of the tyre, is difficult to access, with consequent problems during the phase of maintenance or replacement where there are faults.

Moreover, following prolonged use, the layer of piezoelectric material could detach, partially or totally, form the attachment site, with consequent poor working of the TPMS.

Again, being entirely attached to the tyre, known piezoelectric generators react well to deformations of the tyre but not to mechanical vibrations of the vehicle. This leads to poor exploitation of the mechanical energy available, with consequent reduced yield of the piezoelectric material.

JP 2005178425 describes a device for sensing the pressure of the tyres of a vehicle, devised to lengthen the life of the battery with which it is powered.

Provision is made of a vibrating plate with a piezoelectric element connected electrically to the battery.

During rotation of the tyre the piezoelectric element generates an electromotive force which charges the battery, lengthening the duration thereof.

The main object of the present invention is, therefore, that of eliminating or at least reducing the disadvantages stated above with reference to the self-powered sensing modules for TPMS known to the state of the art, making available a self-powered sensing module which can easily be installed and reached in case of maintenance and replacement.

Another object of the present invention is that of providing a self-powered sensing module for TPMS of increased efficiency.

In particular an object of the invention is that of providing such a self-powered sensing module, therefore without battery, which is powered with a circuit of simple and economical design.

Yet another object of the present invention is that of providing a self-powered sensing module for TPMS, which can be produced at competitive manufacturing costs.

These and other objects, which will be made clearer herein below, are achieved in accordance with the invention with the features listed in the annexed independent claims 1 and 10.

Substantially a self-powered sensing module according to the invention comprises at least one sensor suitable for detecting an operating parameter of a vehicle tyre, means for transmission of the at least one signal detected by the at least one sensor and supply means for the at least one sensor and the transmission means. The supply means comprise a piezoelectric generator connected electrically to a device for harvesting of the piezoelectric energy, both mounted at the tyre inflation valve, so as to be easily replaced and to make optimum use of the mechanical vibrations of the vehicle.

The energy harvesting device comprises a diode bridge rectifier module (52), suitable for rectifying the output voltage of the piezoelectric generator (40) and for transferring it to a storage capacitor (C_{acc}) acting as charge storage for a buck converter module (54) suitable for harvesting the energy produced by the piezoelectric generator (40) and converting it into an output suitable for supplying the at least one sensor (Sp, St, Sa) and the transmission means (Tx).

According to another aspect of the invention a system is provided for the monitoring of the conditions of the tyres of a vehicle comprising at least one self-powered sensing module, defined above, mounted on the inflation valve of a respective tyre and a main unit positioned in the vehicle. The main unit comprises a receiver assembly, a controller and a display, the receiver assembly being suitable for receiving a measurement signal from the transmitter of each self-powered sensing module and for transmitting it, demodulated, to the controller for displaying the conditions of the tyres on the display.

Advantageous aspects of the invention are disclosed by the dependent claims.

Further features of the invention will be made clearer by the following detailed description, referred to one of its embodiments purely by way of a non-limiting example, illustrated in the accompanying drawings, in which:
Figure 1 is a schematic view from above which illustrates a motor vehicle provided with a system for monitoring the conditions of the tyres according to the invention;
Figure 2 is a perspective view of a self-powered sensing module of the present invention, mounted on the inflation valve of a tyre;
Figure 3 is a front view of the self-powered sensing module of Figure 2;
Figure 4 is a side view of the self-powered sensing module of Figure 3;
Figure 5 is a view similar to that of Figure 3, but with parts removed to show the internal components of the self-powered sensing module;
Figure 6 is a perspective view, and with removed parts, of a piezoelectric generator for supply of the sensing module of the invention; and
Figure 7 is a circuit diagram of a device for harvesting piezoelectric energy of the self-powered sensing module of the invention.

In the accompanying drawings identical or similar pans or components are denoted by the same reference numerals.

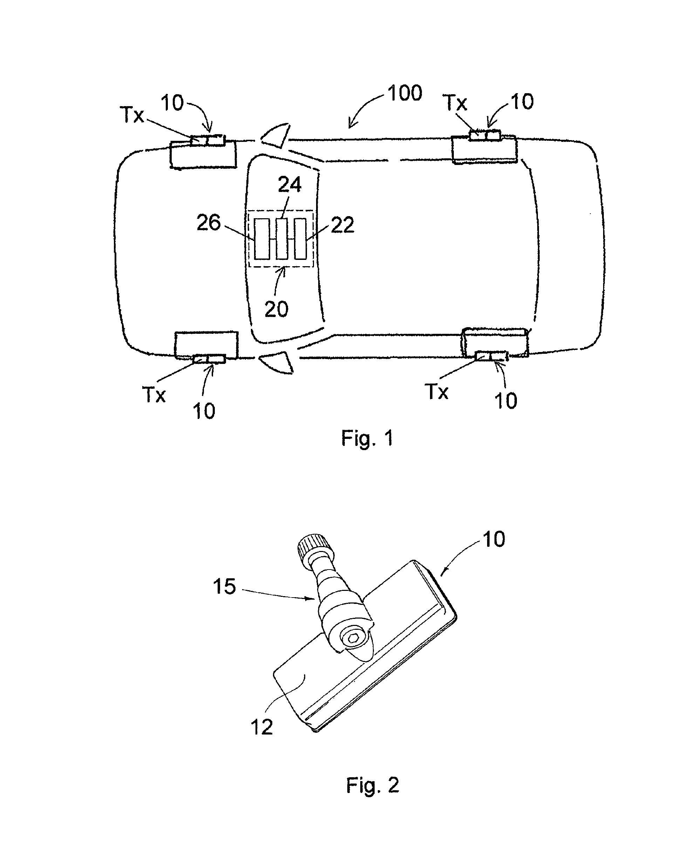

Referring to Figure 1, in it a motor vehicle is illustrated, provided with a system for monitoring the conditions of the tyres according to the invention, denoted in general by reference numeral 100.

More particularly the monitoring system 100 comprises a plurality of self-powered sensing modules 10, each one mounted on the inflation valve 15 (Figure 2) of a respective tyre of the vehicle, and a main unit 20 installed in the vehicle, preferably at the dashboard.

The sensing modules 10 are preferably in a number equal to that of the tyres of the motor vehicle, in the example illustrated four self-powered sensing modules 10.

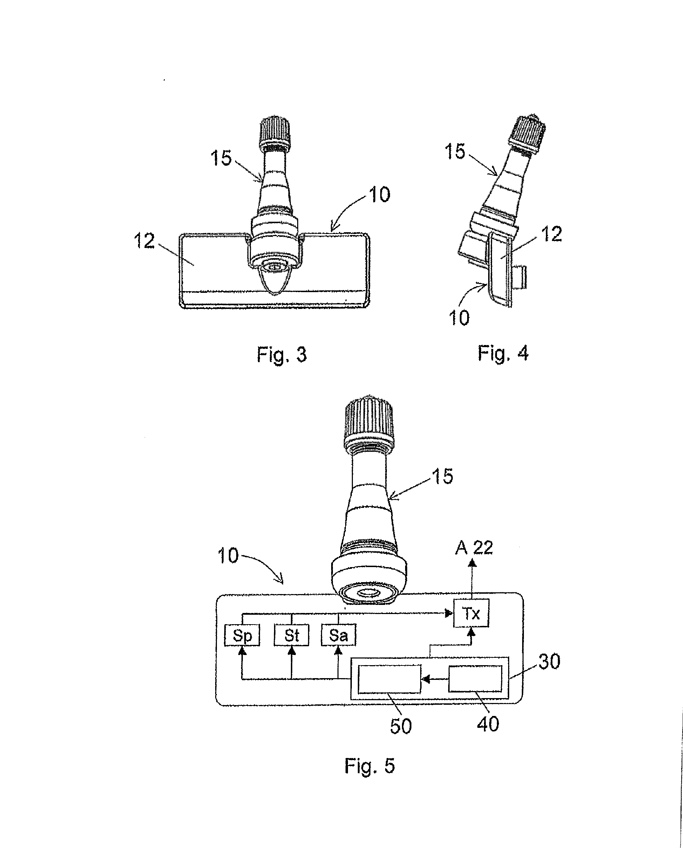

Each sensing module 10 comprises one or more sensors, for example a pressure sensor Sp, a temperature sensor St and an acceleration sensor Sa, shown in Figure 5, and a transmitter Tx suitable for transmitting a signal indicating the values of the parameters detected by the sensors.

The transmitter Tx is preferably a radio frequency transmitter, which transmits a signal having a frequency equal to 433 MHz (in compliance with European specifications) or other frequencies permitted by frequencies control organisations, and with modulation of frequency, of amplitude of phase or pulse transmission.

The main unit 20 comprises a receiver assembly 22, a controller 24 and a display 26. The receiver assembly 22 is preferably a radio frequency receiver assembly coupled at the transmission frequency of the transmitters Tx, which demodulates the signal transmitted by the transmitters Tx and transmits it to the controller 24 for displaying, via the display 26, of the values of the parameters of the tyres detected.

The controller 24 preferably compares the values of the parameters detected with a preset threshold values range. If the parameters detected depart from the preset range, the controller 24 sends to the driver an alarm signal, indicating on the display 26 the presence of faults of functioning.

As shown in greater detail in Figures 2 to 4, the self-powered sensing module 10 comprises a container body 12, with a substantially parallelepiped shape, coupled, for example screwed, to the inflation valve 15 of the respective tyre.

Referring to Figure 5, inside the container body 12 of the sensing module 10 are housed, in addition to the sensors of pressure Sp, of temperature St and of acceleration Sa and the transmitter Tx, means 30 for their supply.

In particular the supply means 30 comprise a piezoelectric generator 40, in electrical connection with a device for harvesting piezoelectric energy 50.

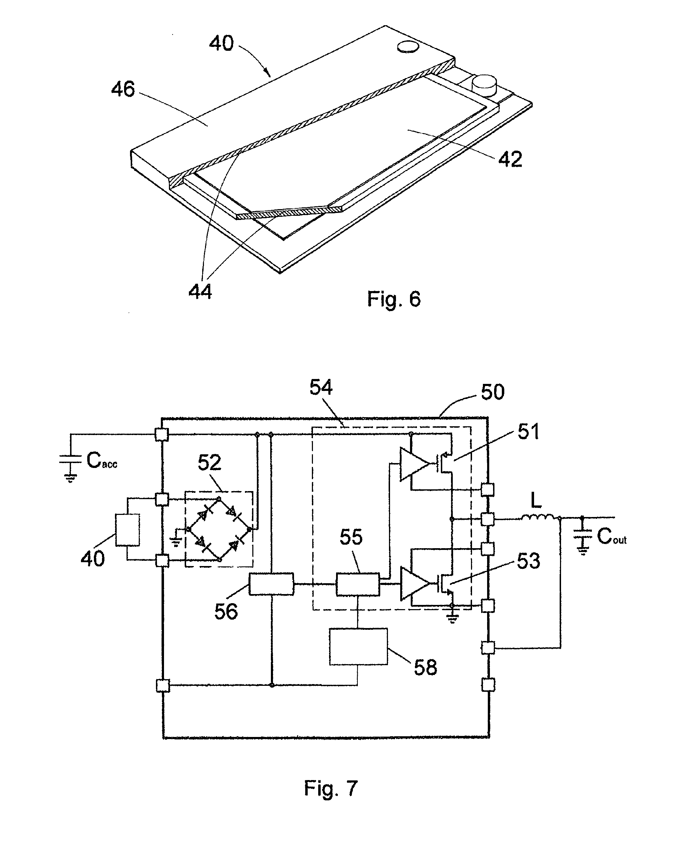

Preferably, as shown in detail in Figure 6, the piezoelectric generator 40 comprises a thin layer of piezoceramic material 42 sandwiched between two conductive layers 44 acting as electrodes, the whole enclosed by an envelope in insulating material 46, for example polymeric material.

Although in the example illustrated in Figure 6 the piezoelectric generator 40 comprises a single layer of piezoceramic material, provision can be made, without departing from the scope of protection of the invention, for piezoelectric generators comprising multiple piezoceramic layers.

The piezoelectric generator 40 uses the direct piezoelectric effect of the layer of piezoceramic material 42, which generates a voltage when subjected to mechanical stresses.

More particularly, following inherent mechanical vibrations of the vehicle, the layer of piezoceramic material 42 of the piezoelectric generator 40 mounted in the sensing module 10 is deformed, generating electrical power, typically of the order of milliwatts, which is used to supply the sensors Sp, St and Sa and the transmitter Tx of the measurement signal.

As mentioned previously, the piezoelectric generator 40 is connected electrically to a device for harvesting piezoelectric energy 50, known as energy harvesting device.

Energy harvesting is based on the principle of obtaining the energy necessary for the supply of electronic devices, such as for example sensors, by taking it from the surrounding environment. It is a process which captures, accumulates and stores small energy as a source of power.

With particular reference to Figure 7, the device for harvesting piezoelectric energy 50 comprises, preferably, a rectifier module 52, a buck converter module 54 with high efficiency and a storage capacitor C_{acc}.

The rectifier module is preferably a diode bridge rectifier module 52, full wave and low leakage, suitable for rectifying the output voltage of the piezoelectric generator 40 and for transferring the rectified output to the capacitor (C_{acc}) acting as charge storage for the buck converter module 54.

The buck converter module 54 is suitable for harvesting the energy produced by the piezoelectric generator 40 and rectified by the rectifier 52, and for converting it into a well-regulated output for the supply of the sensors Sp, St and Sa and of the transmitter Tx of the measurement signal.

Preferably the buck converter module 54 comprises a PMOS switch 51, an NMOS switch 53 and a control unit 55 and is electrically connected to an output capacitor (Cₒᵤₜ) through an inductance (L).

The energy harvesting device 50 preferably comprises, moreover, an undervoltage lockout module 56 electrically connected to said storage capacitor (C_{acc}) and said buck converter module 54. The undervoltage lockout module 56, with very low quiescent current and wide hysteresis window, allows charge to be stored in the storage capacitor C_{acc} until part of the charge stored is transferred to the output of the buck converter module 54.

In particular, when the voltage at the terminals of the storage capacitor C_{acc} exceeds a preset upper threshold value of the undervoltage lockout module 56, the buck converter module 54 is enabled, with consequent transfer of charge from the storage capacitor C_{acc} to the output capacitor C_{out.} Vice versa, when the voltage at the terminals of the storage capacitor C_{acc} drops below a preset lower threshold value of the undervoltage lockout module 56, the buck converter module 54 is disabled.

When the TPMS 100, and the respective self-powered sensing modules 10, are not in use, and therefore do not require energy, the piezoelectric energy harvesting device 50 enters sleep mode.

For this purpose, the piezoelectric energy harvesting device 50 preferably comprises a sleep module 58 in electrical connection with the undervoltage lockout module 56 and the buck converter module 54, which regulates the voltage in output from the buck converter module 54, consuming only 950 nA of quiescent current, and continuing to charge the storage capacitor C_{acc}.

The piezoelectric energy harvesting device 50 allows, therefore, the storage of charge both in the storage capacitor C_{acc} and in the output capacitor C_{out.} In particular, once the voltage in output from the buck converter module 54 has been regulated, every surplus charge is stored in the storage capacitor C_{acc}.

The piezoelectric energy harvesting device 50 operates within an input voltage range comprised between 2.7V and 20V and therefore supports a wide range of piezoelectric generators. The high efficiency buck converter 54 is able to supply up to 100 mA of direct output current or higher pulsed loads. Its output can be programmed on one of four fixed voltages provided, i.e. 1.8V, 2.5V, 3.3V or 3.6V for the supply of the sensors Sp, St and Sa and the transmitter Tx of the measurement signal. The quiescent current is just 950 nA, with consequent increase in the efficiency of the self-powered sensing module 10.

From what is stated above it is clear that, thanks to their particular positioning, i.e. at the inflation valve of a respective tyre, the self-powered sensing modules for TPMS of the invention are, advantageously, easy to install and reach in the case of maintenance and replacement.

Moreover the piezoelectric generator mounted in them is able to absorb a high quantity of vibrational energy, with consequent increase in its efficiency, which is further increased thanks to the presence of the device for harvesting piezoelectric energy.

Naturally the invention is not limited to the particular embodiments previously described and illustrated in the accompanying drawings, but numerous detailed changes can be made thereto, within the reach of a person skilled in the art, without thereby departing from the scope of protection of the same invention, as defined in the annexed claims.

## Claims

1. A self-powered sensing module (10) comprising at least one sensor (Sp, St, Sa) suitable for detecting an operating parameter of a vehicle tyre, transmission means (Tx) of the at least one signal detected by the at least one sensor (Sp, St, Sa) and supply means (30, 40, 50) for the at least one sensor (Sp, St, Sa) and the transmission means (Tx), said supply means (30, 40, 50) comprising a piezoelectric generator (40) electrically connected to a harvesting device (50) of the piezoelectric energy, **characterized in that** said piezoelectric generator (40) and said harvesting device (50) electrically connected thereto are mounted at the tyre inflation valve (15), thereby being easily replaceable and making optimum use of the mechanical vibrations of the vehicle, and
**in that** said energy harvesting device (50) comprises a diode bridge rectifier module (52) suitable for rectifying the output voltage of the piezoelectric generator (40) and for transferring it to a storage capacitor (C_{acc}) acting as a charge storage for a buck converter module (54) suitable for harvesting the energy generated by the piezoelectric generator (40) and converting it in an output suitable for supplying the at least one sensor (Sp, St, Sa) and the transmission means (Tx).

2. The sensing module (10) according to claim 1, **characterized in that** it comprises a container body (12) wherein said at least one sensor (Sp, St, Sa), said transmission means (Tx) and said supply means (30, 40, 50) are housed, said container body being fixed to the tyre inflation valve (15).

3. The sensing module (10) according to claim 1 or 2, **characterized in that** said piezoelectric generator (40) comprises at least one layer made of piezoceramic material (42) sandwiched between two conductive layers (44), the whole being closed by a envelope made of insulating material (46).

4. The sensing module (10) according to anyone of the preceding claims, **characterized in that** said buck converter module (54) is able to supply to 100 mA of output current and comprises a PMOS switch (51), an NMOS switch (53) and a control unit (55) and is electrically connected to an output capacitor (Cₒᵤₜ) through an inductance (L).

5. The sensing module (10) according to anyone of the preceding claims, **characterized in that** it further comprises an undervoltage lockout module (56) electrically connected to said storage capacitor (C_{acc}) and said buck converter module (54).

6. The sensing module (10) according to claim 5, **characterized in that** it further comprises a "sleep" module (58) electrically connected to said undervoltage lockout module (56), suitable for adjusting the output voltage of said buck converter module (54), consuming only 950 nA of quiescent current, meanwhile continuing to load the storage capacitor (C_{acc}).

7. The sensing module (10) according to any one of the preceding claims, **characterized in that** said piezoelectric energy harvesting device (50) operates within a voltage range comprised between 2,7V e 20V.

8. A system for monitoring the conditions of vehicle tyres comprising:
- at least one self-powered sensing module (10) according to any one of the preceding claims, mounted onto the inflation valve (15) of a respective tyre; and
- a main unit (20) placed in the vehicle and comprising a receiver assembly (22), a controller (24) and a display (26), said receiver assembly (22) being suitable for receiving a measurement signal from the transmission means (Tx) of each self-powered sensor module (10) and for transmitting it, demodulated, to the controller (24) for diplaying the tyre conditions on the display (26).
